# EUROPEAN PATENT SPECIFICATION

(11) **EP 2 984 964 B1**
(45) Date of publication and mention of the grant of the patent: **28.06.2017**
(21) Application number: 15180362.4
(22) Date of filing: 10.08.2015
(51) Int. Cl.: A44C 27/00, A44C 5/00

(54) **USE OF A MATERIAL IN AN ORNAMENTAL MEMBER TO MAKE IT LESS LIKELY TO CAUSE AN NI ALLERGY**
VERWENDUNG EINES MATERIALS IN EINEM ZIERGEGENSTAND UM ES WENIGER WAHRSCHEINLICH ZU MACHEN EINE NI ALLERGIE ZU VERURSACHEN
UTILISATION D'UN MATÉRIAU DANS UN OBJET DÉCORATIF POUR DIMINUER LA PROBABILITÉ DE CAUSER UNE ALLERGIE AU NI

(30) Priority: 12.08.2014 JP 2014164437
(43) Date of publication of application: 17.02.2016
(73) Proprietor: Seiko Epson Corporation, Tokyo 160-8801 (JP)
(72) Inventor: Suzuki, Katsumi, Nagano, 392-8502 (JP); Ito, Tsutomu, Nagano, 392-8502 (JP); Takemori, Hiroyuki, Nagano, 392-8502 (JP)
(74) Representative: Hoffmann Eitle

(56) References cited:
- EP-A1- 0 656 255
- EP-A1- 1 295 961
- EP-A1- 1 314 794

## Description

### BACKGROUND

### 1. Technical Field

The present invention relates to the use of a material containing one or more elements selected from the group consisting of Mg, Al, Zn, Fe in an ornamental member.

### 2. Related Art

For ornaments such as watches required to have an excellent aesthetic appearance, a wide variety of metal materials are used.

In particular, stainless steel generally has an excellent silver appearance, and also has characteristics that it has excellent corrosion resistance and the like, is inexpensive as compared with noble metals such as Au, Ag, and Pt, and has high hardness, excellent mechanical strength etc., and therefore has been used for various ornaments (see, for example JP-A-2006-304956).

As the stainless steel to be used for ornaments, there are many types of stainless steel containing Ni.

Ni is known as an allergen, however, stainless steel having been used for ornaments from the past has been considered as a sufficiently safe material.

However, recently, in REACH (Registration, Evaluation, Authorization and Restriction of Chemicals) or the like, stricter safety (difficulty in causing Ni allergy) than in the past is demanded.

EP 1 314 794 A1 relates to a decorative article on which a film comprising iron is formed to improve corrosion resistance.

### SUMMARY

The invention is defined by claim 1.

An advantage of some aspects of the invention is to provide an ornamental member and an ornament which exhibit characteristics possessed by stainless steel and less likely to cause a Ni allergy problem.

Such an advantage is achieved by the invention described below.

A use according to an aspect of the invention includes a first part composed of stainless steel containing Ni, and a second part electrically connected to the first part and composed of a material containing one or more elements selected from the group consisting of Mg, Al, Zn, and Fe.

According to this configuration, an ornamental member which exhibits characteristics possessed by stainless steel, and also is less likely to cause a Ni allergy problem can be provided.

In the use according to the aspect of the invention, it is preferable that the second part is provided in a region where the second part is not visually observed.

According to this configuration, while exhibiting excellent appearance of stainless steel, the safety (difficulty in causing a Ni allergy problem) of the ornamental member can be particularly enhanced.

In the use according to the aspect of the invention, it is preferable that the second part is formed using a material in the form of a film.

According to this configuration, the second part can be preferably provided even in a relatively narrow space. In addition, the ratio of the surface area of the second part to the volume thereof (specific surface area) can be made large, and therefore, Mg, Al, Zn, or Fe which is a constituent component of the second part can be favorably ionized, and thus, a Ni allergy problem can be made less likely to occur.

In the use according to the aspect of the invention, it is preferable that the second part is preferably formed using a metal foil.

According to this configuration, the second part can be preferably provided even in a relatively narrow space. In addition, the ratio of the surface area of the second part to the volume thereof (specific surface area) can be made large, and therefore, Mg, Al, Zn, or Fe which is a constituent component of the second part can be favorably ionized, and thus, a Ni allergy problem can be made less likely to occur. Further, this is advantageous from the viewpoint of stable production of the ornamental member and reduction in the production cost.

In the use according to the aspect of the invention, it is preferable that the content of Ni in the first part is 2.0 mass% or more and 29.0 mass% or less.

The stainless steel having a relatively high Ni content in this manner generally has excellent workability, and therefore is advantageous to the enhancement of the productivity of an ornamental member. Further, the stainless steel having such a Ni content generally has excellent appearance. However, according to the related art, the elution of Ni is liable to occur. On the other hand, according to the aspect of the invention, even in the case of containing Ni at such a relatively high content, the elution of Ni can be reliably prevented, and therefore, both of excellent appearance and high safety (difficulty in causing a Ni allergy problem) can be achieved. That is, in the case where the content of Ni in the first part is within the above range, the effect of the aspect of the invention is more prominently exhibited.

In the use according to the aspect of the invention, it is preferable that the first part is composed of SUS 304.

SUS 304 has particularly excellent workability among various types of stainless steel, and also exhibits excellent appearance, and further is an inexpensive material, however, according to the related art, the elution of Ni is liable to occur. On the other hand, according to the aspect of the invention, even if the first part is composed of SUS 304, the elution of Ni can be reliably prevented. Accordingly, an ornamental member which is less likely to cause a Ni allergy problem while exhibiting particularly excellent characteristics of SUS 304 can be provided.

It is preferable that the ornamental member is used in contact with a human body.

Such an ornamental member is generally required to have particularly high decorativeness as an ornamental member, and also is liable to cause a problem such as allergy due to the effect of sweat or the like depending on the constituent material of the ornamental member. However, according to the aspect of the invention, even in the case where the ornamental member is a member which comes in contact with a human body at the time of use, the elution of Ni can be reliably prevented, and thus, the occurrence of the problem as described above can be reliably prevented. Accordingly, the effect of the aspect of the invention is more prominently exhibited when the ornamental member is a member which comes in contact with a human body at the time of use.

It is preferable that the ornamental member is a watch band.

A watch band has a relatively large contact area with a human body, and also is required to have high decorativeness. However, according to the aspect of the invention, even in the case where the ornamental member is applied to a watch band, the elution of Ni can be reliably prevented. That is, the effect of the aspect of the invention is more prominently exhibited when the aspect of the invention is applied to a watch band.

An ornament according to another aspect includes the ornamental member according to the aspect of the invention.

According to this configuration, an ornament which exhibits characteristics possessed by stainless steel, and also is less likely to cause a Ni allergy problem can be provided.

An ornament according to still another aspect includes a first part composed of stainless steel containing Ni, and a second part electrically connected to the first part and composed of a material containing one or more elements selected from the group consisting of Mg, Al, Zn, and Fe.

According to this configuration, an ornament which exhibits characteristics possessed by stainless steel, and also is less likely to cause a Ni allergy problem can be provided.

It is preferable that the ornament according to the aspect is a watch.

A wristwatch has a relatively large contact area with a human body and is often in contact with a human body over a long period of time, and also is required to have high decorativeness. However, according to the aspect of the invention, even in the case where the ornament is applied to a wristwatch, the elution of Ni can be reliably prevented. That is, the effect of the aspect of the invention is more prominently exhibited when the aspect of the invention is applied to a wristwatch.

### BRIEF DESCRIPTION OF THE DRAWINGS

The invention will be described with reference to the accompanying drawings, wherein like numbers reference like elements.
FIG. 1 is a perspective view showing a preferred embodiment of a watch (portable watch) as an ornament.
FIGS. 2A and 2B are views schematically showing a preferred embodiment of a watch band as an ornamental member. FIG. 2A is a front view and FIG. 2B is a side view.
FIG. 3 is a perspective view of the watch band shown in FIGS. 2A and 2B.
FIG. 4 is a partial cross-sectional view of the watch band shown in FIGS. 2A and 2B.
FIG. 5 is an enlarged cross-sectional view showing an engagement portion of a connecting device of the watch band shown in FIGS. 2A and 2B.
FIG. 6 is a perspective view showing a state in which a metal member (second member) and a connecting device are housed in a piece member.

### DESCRIPTION OF EXEMPLARY EMBODIMENTS

The ornamental member includes a first part composed of stainless steel containing Ni, and a second part electrically connected to the first part and composed of a material containing one or more elements selected from the group consisting of Mg, Al, Zn, and Fe.

According to such a configuration, the elution of Ni from the ornamental member is effectively prevented, and thus, the occurrence of a problem such as allergy can be prevented. Accordingly, an ornamental member which exhibits characteristics (for example, excellent appearance, etc.) possessed by stainless steel, and also is less likely to cause a Ni allergy problem can be provided.

The ornamental member may be any as long as it is a member required to have decorativeness, but is preferably a member which comes in contact with a human body at the time of use.

Such an ornamental member is generally required to have particularly high decorativeness as an ornamental member, and also is liable to cause a problem such as allergy due to the effect of sweat or the like depending on the constituent material of the ornamental member. However, according to the invention, even in the case where the ornamental member is a member which comes in contact with a human body at the time of use, the occurrence of the problem as described above can be reliably prevented. Accordingly, the effect of the invention is more prominently exhibited when the ornamental member is a member which comes in contact with a human body at the time of use.

Examples of the ornamental member which comes in contact with a human body at the time of use include constituent members of various ornaments such as glasses (including sunglasses, head-mounted displays (HMD), etc.), earrings, pierced earrings, necklaces, wristwatches (including smart watches, etc.), bracelets, rings, and anklets, however, a member for a watch is preferred, and particularly, a watch band is more preferred.

Such a member has a relatively large contact area with a human body, and also is required to have high decorativeness. However, according to the invention, even such a member can reliably exhibit the effect described above. That is, in the case where the invention is applied to such a member, the effect of the invention is more prominently exhibited.

In the following description, a case where the invention is applied to a watch band and a watch provided with the watch band will be described as a representative example.

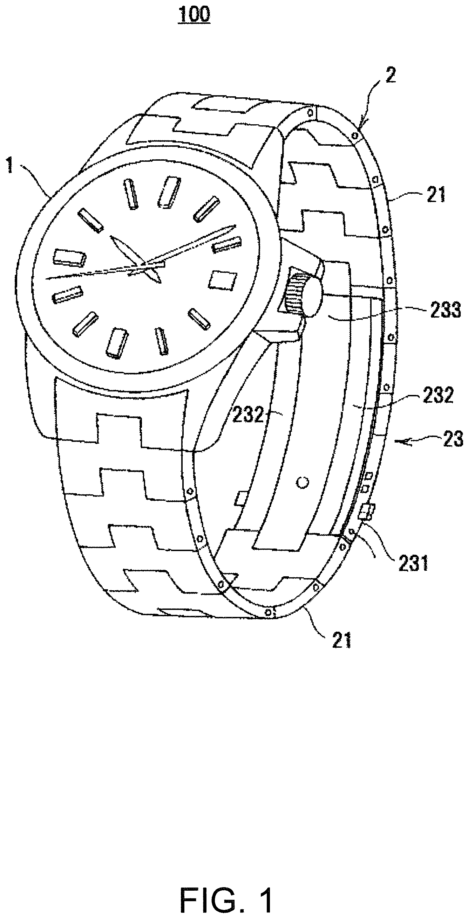

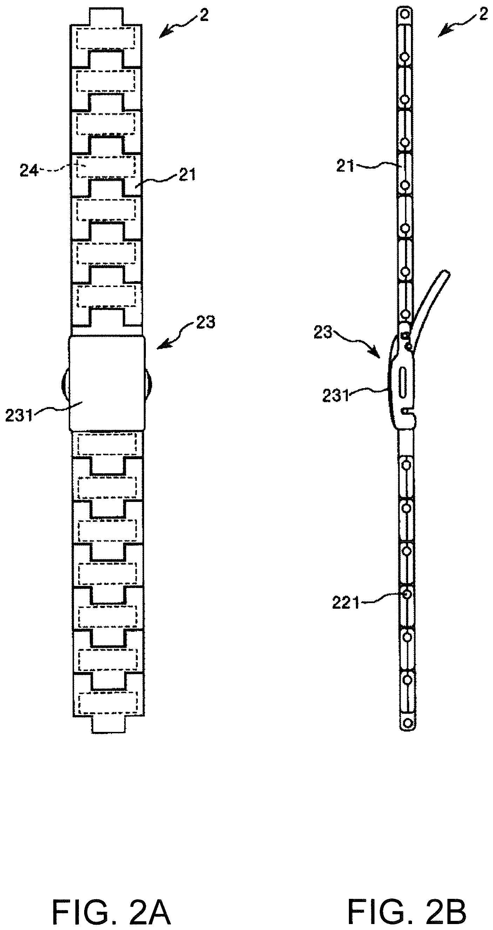

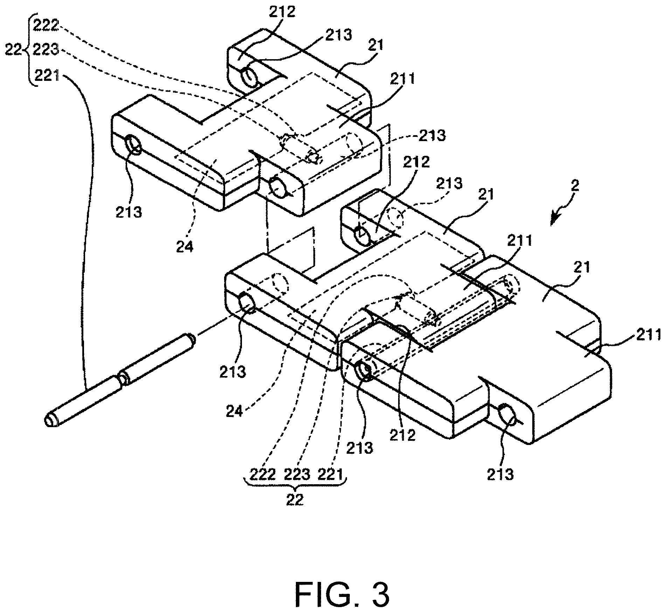

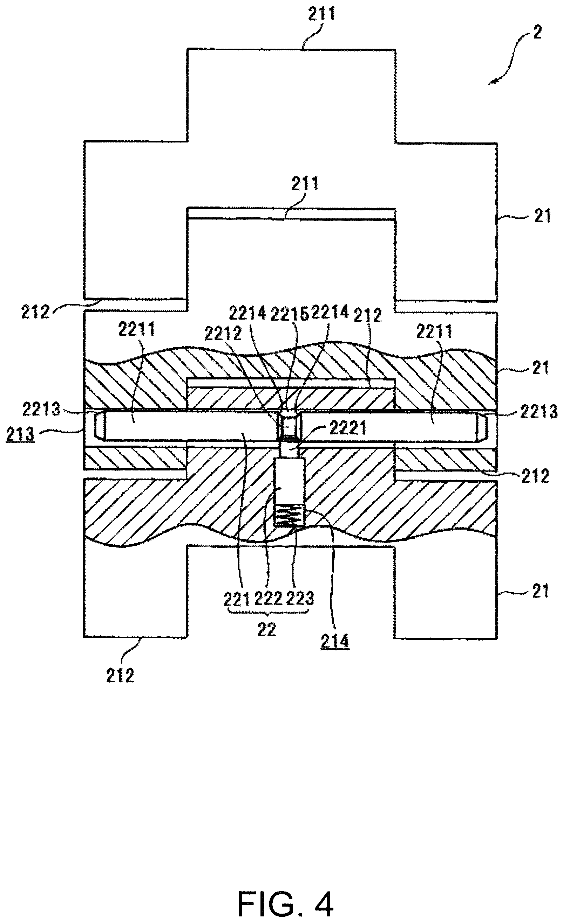

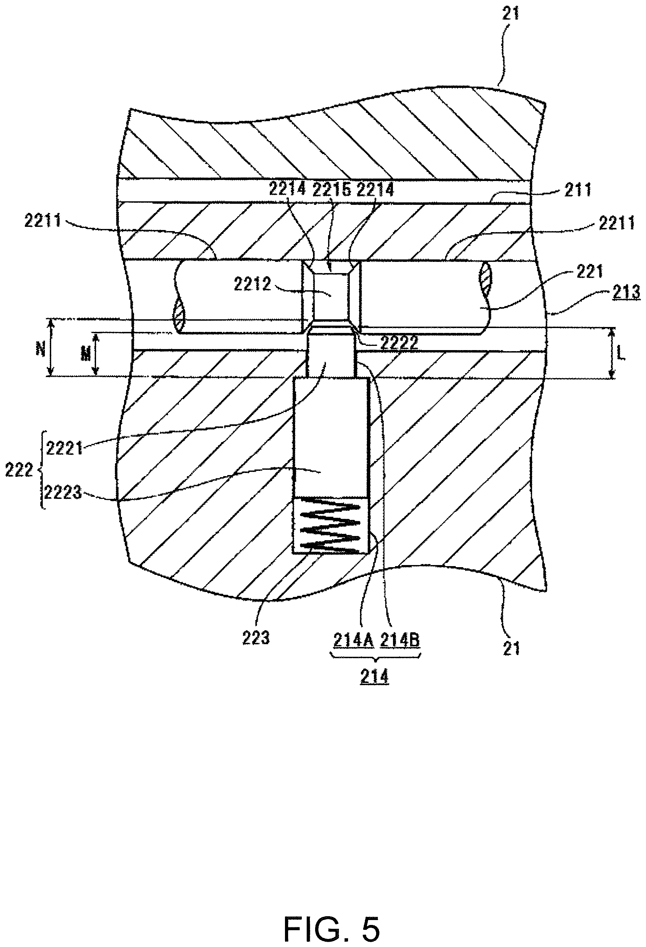

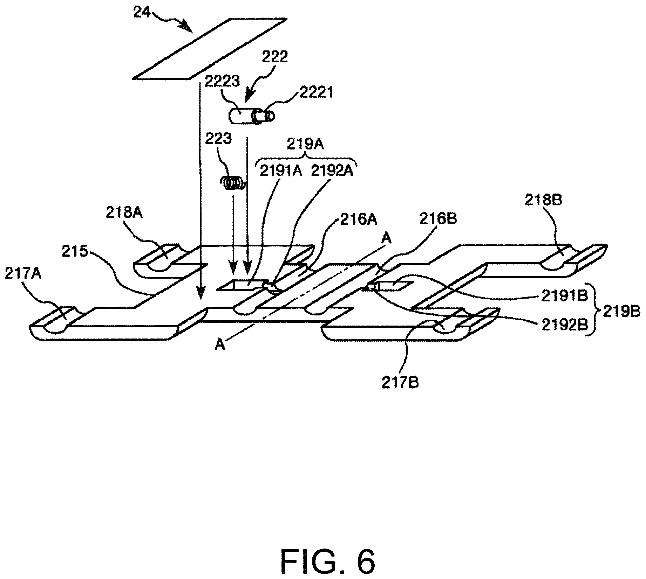

FIG. 1 is a perspective view showing a preferred embodiment of a watch (portable watch) as an ornament. FIGS. 2A and 2B are views schematically showing a preferred embodiment of a watch band as an ornamental member. FIG. 2A is a front view and FIG. 2B is a side view. FIG. 3 is a perspective view of the watch band shown in FIGS. 2A and 2B. FIG. 4 is a partial cross-sectional view of the watch band shown in FIGS. 2A and 2B. FIG. 5 is an enlarged cross-sectional view showing an engagement portion of a connecting device of the watch band shown in FIGS. 2A and 2B. FIG. 6 is a perspective view showing a state in which a metal member (second member) and a connecting device are housed in a piece member. In FIGS. 4 and 5, the illustration of a metal member 24 is omitted.

A watch 100 includes a watch main body 1, which displays the time, and a band (watch band) 2 connected to this watch main body 1.

The watch main body 1 is configured such that in a case composed of stainless steel or the like, a movement, a dial, hands indicating the time, etc. are disposed, and sealed in a waterproofing structure with a windshield glass (cover glass) and a rear lid.

In this embodiment, a watch which displays the time in an analog manner is shown as an example, however, the watch may be a watch which displays the time in a digital manner.

The band 2 includes a plurality of pieces 21, a connecting device 22, which connects adjacent pieces, and a clasp 23, and has a strip shape as a whole. The watch main body 1 and the band 2 form a ring shape.

The respective members (the piece 21, the connecting device 22, and the clasp 23) constituting the band 2 are composed of stainless steel containing Ni and function as a first part (first member).

The content of Ni in the first part (first member) is preferably 2.0 mass% or more and 29.0 mass% or less, more preferably 5.0 mass% or more and 29.0 mass% or less, further more preferably 7.0 mass% or more and 11.0 mass% or less.

The stainless steel having a relatively high Ni content in this manner generally has excellent workability, and therefore is advantageous to the enhancement of the productivity of the band 2 as the ornamental member.

Further, the stainless steel having such a Ni content generally has excellent appearance. However, according to the related art, the elution of Ni is liable to occur. On the other hand, according to the invention, as described in detail below, by providing the second member (second part) along with the first member (first part), the elution of Ni can be prevented. In particular, according to the invention, even in the case of containing Ni at a relatively high content as described above, the elution of Ni can be reliably prevented, and therefore, both of excellent appearance and high safety (difficulty in causing a Ni allergy problem) can be achieved. That is, in the case where the content of Ni in the first part (first member) is within the above range, the effect of the invention is more prominently exhibited.

As described above, the first part (first member) may be any as long as it is composed of stainless steel containing Ni, and examples of the stainless steel constituting the first part (first member) include austenitic stainless steel, ferritic stainless steel, martensitic stainless steel, two-phase (austenitic-ferritic) stainless steel, and precipitation hardened stainless steel, however, particularly, austenitic stainless steel is preferred.

Among various types of stainless steel, austenitic stainless steel generally has particularly excellent workability and also has excellent corrosion resistance and heat resistance. Further, austenitic stainless steel generally contains Ni at a high content (for example, 6.0 mass% or more and 28.0 mass% or less). However, even if it contains Ni at a relatively high content in this manner, according to the invention, the elution of Ni can be reliably prevented. Therefore, in the case where the first part (first member) is composed of austenitic stainless steel, the effect of the invention is more prominently exhibited.

In particular, the first part (first member) is preferably composed of SUS 304.

Among various types of stainless steel, SUS 304 has particularly excellent workability and also exhibits excellent appearance, and further is an inexpensive material, however, according to the related art, the elution of Ni is liable to occur. On the other hand, according to the invention, even if the first part (first member) is composed of SUS 304, the elution of Ni can be reliably prevented. Accordingly, the band (ornamental member) 2 which is less likely to cause a Ni allergy problem while exhibiting particularly excellent characteristics possessed by SUS 304 can be provided.

The first part (first member) may be any as long as stainless steel is used as a starting material, and for example, may be a member composed of a material having a different composition from the original composition of the stainless steel by undergoing any of various treatments such as a carburization treatment and a nitriding treatment.

### First Part (First Member)

Hereinafter, the piece 21, the connecting device 22, and the clasp 23 as the first part (first member) constituting the band 2 will be described in detail.

The piece 21 has a substantially rectangular plate shape, and a convex portion 211 is formed around the center of a longer side. Further, a concave portion 212 is formed around the center of a longer side on the opposite side from the convex portion 211. In each of a tip end portion of the convex portion 211 and protruding portions of both sides of the concave portion 212, a through-hole 213 passing therethrough in a longer side direction is formed. The through-hole 213 of the convex portion 211 and the through-holes 213 of the concave portion 212 are arranged on the same line in a state where the convex portion 211 is engaged with the adjacent concave portion 212.

As shown also in FIGS. 4 and 5, the connecting device 22 includes a connecting pin 221 as a connecting tool, an engaging pin 222 as an engaging tool housed inside the piece 21, and a coil spring 223 as an elastic member housed inside the piece 21 along with the engaging pin 222.

The connecting pin 221 is inserted in common into the through-holes 213 of the convex portion 211 and the concave portion 212 in a state where the convex portion 211 of the piece 21 is engaged with the concave portion 212 of the adjacent piece 21. As shown in FIG. 4, the connecting pin 221 has a substantially cylindrical shape and includes a large-diameter portion 2211 and a small-diameter portion 2212 formed in a central portion of the large-diameter portion 2211. At each of both ends of the large-diameter portion 2211, an axial end tapered portion 2213 is formed as an inclined portion with a given inclination. The small-diameter portion 2212 is formed in a diameter dimension smaller than that of the large-diameter portion 2211. Between the large-diameter portion 2211 and the small-diameter portion 2212, a tapered portion 2214 is provided as an inclined portion connecting these portions with a given inclination from the diameter dimension of the large-diameter portion 2211 to the diameter dimension of the small-diameter portion 2212. An engaging concave portion 2215 is formed by a space surrounded by the small-diameter portion 2212 and the tapered portion 2214.

Further, a housing space 214 in which the engaging pin 222 and the coil spring 223 are housed is provided inside the piece 21.

As shown in FIG. 5, the housing space 214 is a space in a stepped cylindrical shape and is formed such that the center axis thereof is orthogonal to the axis of the through-hole 213 formed in the convex portion 211 of the piece 21 and communicates with the center of the through-hole 213. The housing space 214 includes a housing space main body 214A of a cylindrical space and a communicating portion 214B of a cylindrical space having a width dimension in a direction orthogonal to the axial direction smaller than that of the housing space main body 214A and communicating the through-hole 213 to the housing space main body 214A.

The engaging pin 222 has a stepped cylindrical shape, is housed and held in the housing space 214 in a movable manner in the axial direction, and is engaged with the engaging concave portion 2215 of the connecting pin 221. At one end of the engaging pin 222, a small-diameter engaging portion 2221 which is a protruding portion is formed, and at the other end thereof, a large-diameter engaging portion 2223 having a diameter dimension larger than that of the small-diameter engaging portion 2221 is formed so as to be coaxial with the small-diameter engaging portion 2221. The small-diameter engaging portion 2221 is housed in the communicating portion 214B and held such that the tip end thereof is retractable in the through-hole 213. At a tip end of the small-diameter engaging portion 2221, an engaging tapered portion 2222 in a tapered shape with a given inclination is formed. The large-diameter engaging portion 2223 is housed and held in the housing space main body 214A.

The coil spring 223 is housed and held in the housing space 214 along with the engaging pin 222 such that when the small-diameter engaging portion 2221 is pushed by the communicating portion 214B, the engaging pin 222 is biased in a direction in which the tip end of the small-diameter engaging portion 2221 protrudes to the through-hole 213.

As shown in FIG. 5, a length L from the stepped portion of the housing space 214 to the tip end of the small-diameter engaging portion 2221 is set to be longer than a length M from the stepped portion of the housing space 214 to the surface of the large-diameter portion 2211 of the connecting pin 221 and shorter than a length N from the stepped portion of the housing space 214 to the surface of the small-diameter portion 2212 of the connecting pin 221. Here, the length L is a length in a state where the stepped portion of the engaging pin 222 is in contact with the stepped portion of the housing space 214. Further, the length M and the length N are each a length in a state where the connecting pin 221 is in contact with the inner surface of the through-hole 213 on the opposite side from the communicating portion 214B.

The clasp 23 includes a front cover 231 functioning as a front lid, a pair of left and right intermediate plates 232 connected to the front cover 231 with a connecting pin, and a lower plate 233 connected to these intermediate plates 232 with a connecting pin, and is configured such that the intermediate plates 232 and the lower plate 233 are freely foldable under the front cover 231.

### Second Part (Second Member)

Inside the piece 21, a metal member 24 is provided as the second member (second part) which is composed of a material containing one or more elements selected from the group consisting of Mg, Al, Zn, and Fe, and is electrically connected to the piece 21, the connecting device 22, and the clasp 23 as the first member (member composed of stainless steel containing Ni) described above.

According to this, the elution of Ni from the watch band 2 is prevented. This is because when the watch band 2 is placed in an environment where Ni is easily eluted, Mg, Al, Zn, or Fe which is a constituent component of the metal member 24 as the second member (second part) is preferentially ionized from the metal member 24, and due to electrons generated as a result of the ionization, the elution (ionization) of Ni from the first member (first part) is prevented.

In this manner, by preventing the elution of Ni as an allergen or the like, a Ni allergy problem can be made less likely to occur when the watch 100 is used. The effect as described above is exhibited as long as Mg, Al, Zn, or Fe constituting the metal member 24 as the second member (second part) can be ionized, and therefore, in general, the Ni allergy problem can be continuously made less likely to occur for a sufficiently long period of time. Further, for example, like a diver's watch or the like, even in the case of a watch exposed to particularly severe conditions, the effect described above can be reliably exhibited for a sufficiently long period of time.

In particular, in this embodiment, the metal member 24 as the second member (second part) is provided in a region where the metal member 24 is not visually observed (inside the piece 21) in a state where the band 2 (watch 100) is used, and therefore, while exhibiting excellent appearance of stainless steel constituting the first member, the safety (difficulty in causing a Ni allergy problem) of the band 2 (watch 100) can be particularly enhanced.

The metal member 24 as the second member (second part) may have any shape, but is preferably formed using a material in the form of a film (sheet).

According to this, even in the case of a relatively narrow space as the inside of the piece 21, the metal member 24 can be favorable placed. Further, the ratio of the surface area of the metal member 24 to the volume thereof (specific surface area) can be made large, and therefore, Mg, Al, Zn, or Fe which is a constituent component of the metal member 24 can be favorably ionized, and thus, a Ni allergy problem can be made less likely to occur.

As the material in the form of a film, for example, a metal foil; a plating film formed by any of various plating methods such as a wet plating method and a dry plating method; a sprayed film formed by thermal spraying; or the like can be used, however, a metal foil is preferred.

According to this, the effect as described above is reliably obtained, and also the material in the form of a film (metal foil) is easily obtained, and this configuration is advantageous also from the viewpoint of stable production of the band 2 (watch 100) and reduction in the production cost.

As described above, the metal member 24 as the second member (second part) may be any as long as it is composed of a material containing one or more elements selected from the group consisting of Mg, Al, Zn, and Fe, however, the sum of the contents of Mg, Al, Zn, and Fe in the metal member 24 is preferably 90.0 mass% or more, more preferably 95.0 mass% or more.

According to this, the effect described above is more stably exhibited for a longer period of time.

The metal member 24 particularly preferably contains Al as a main component among the above-described components (Mg, Al, Zn, and Fe).

According to this, the effect described above is more prominently exhibited.

The content of Al in the second member is preferably 50 mass% or more, more preferably 80 mass% or more, further more preferably 95 mass% or more.

According to this, the effect as described above is more prominently exhibited.

In the case where in the watch 100, members (particularly, members which may come in contact with the skin) such as the case and a rear lid constituting the watch main body 1 are composed of stainless steel containing Ni, and are electrically connected to the metal member 24 as the second member (second part), these members (members constituting the watch main body 1) function as the first member, and the elution of Ni from the watch 100 as a whole can be more effectively prevented. Accordingly, the safety (difficulty in causing a Ni allergy problem) of the watch 100 as a whole can be particularly enhanced.

Next, a method for connecting the pieces 21 when producing the band 2 will be described.

First, one of the tip ends of the connecting pin 221 is inserted into the through-holes 213 of adjacent pieces 21 in a state where the convex portion 211 and the concave portion 212 of the adjacent pieces 21 are engaged with each other so that the through-holes 213 of the adjacent pieces 21 are continuous. As shown in FIG. 5, the length L is set to be longer than the length M, and therefore, the axial end tapered portion 2213 of the connecting pin 221 is brought into contact with the engaging tapered portion 2222 of the small-diameter engaging portion 2221 protruding to the through-hole 213.

Then, when the connecting pin 221 is further pushed in, since the axial end tapered portion 2213 is in contact with the engaging tapered portion 2222, while these members slide with each other, the connecting pin 221 pushes the small-diameter engaging portion 2221 toward the communicating portion 214B. In such a case, the engaging pin 222 resists the bias of the coil spring 223 and moves until the length L thereof is decreased to the length M. Then, the connecting pin 221 is further inserted in a state where the engaging tapered portion 2222 is in contact with the outer peripheral surface of the connecting pin 221, and when the engaging concave portion 2215 is located at the position of the small-diameter engaging portion 2221, the small-diameter engaging portion 2221 protrudes again, and the engaging concave portion 2215 is engaged with the tip end of the small-diameter engaging portion 2221. In the same manner, a plurality of the pieces 21 are connected to one another until the band 2 of the watch 100 has a given length.

As shown in FIG. 5, in the thus connected pieces 21, the length L is set to be smaller than the length N in a state where the engaging concave portion 2215 of the connecting pin 221 is engaged with the tip end of the small-diameter engaging portion 2221 of the engaging pin 222. In such a case, the connecting pin 221 is in a state where it is not pressed by the engaging pin 222. According to this, the connecting pin 221 can freely rotate around its axis even in a state where the connecting pin 221 is engaged with the engaging pin 222, and therefore, the connected pieces 21 can rotate smoothly around the connecting pin 221 as the axis at the time of use of the watch 100.

When the piece 21 moves at the time of use of the watch 100 and the connecting pin 221 moves in the through-hole 213, the engaging tapered portion 2222 comes in contact with the tapered portion 2214 of the connecting pin 221 to prevent the connecting pin 221 from moving further. Even in the case where the connecting pin 221 further moves and the engaging tapered portion 2222 rides on the tapered portion 2214, the connecting pin 221 returns to the original position due to the elastic force of the coil spring 223. In this manner, the connecting pin 221 is prevented from falling out from the through-hole 213.

When an end portion of the connecting pin 221 is pushed in with a given force by using a specialized tool, the tapered portion 2214 comes in contact with the engaging tapered portion 2222 to press the small-diameter engaging portion 2221 toward the communicating portion 214B. In such a case, the engaging pin 222 resists the elastic force of the coil spring 223 and moves, and therefore, the piece 21 can be separated by pulling the connecting pin 221 out from the through-hole 213.

A pushing force for the connecting pin 221 can be easily set by changing the inclinations of the axial end tapered portion 2213 and the tapered portion 2214 of the connecting pin 221, and the engaging tapered portion 2222 of the engaging pin 222.

Next, with reference to FIG. 6, a method for producing the piece 21 in which the connecting device 22 and the metal member 24 are housed inside will be described.

When the piece 21 housing the connecting device 22 and the metal member 24 is produced, first, one plate-shaped member 215 is prepared in a state where the planar shape of the piece 21 is arranged in line symmetry across the center line A-A in FIG. 6.

On one surface of the prepared plate-shaped member 215, semicircular grooves 216A and 216B, which become the through-hole 213 of the convex portion 211 of the piece 21, and each have a cross section orthogonal to the longitudinal direction in a semicircular shape, and semicircular grooves 217A, 217B, 218A, and 218B, which become the through-holes 213 of the concave portion 212 of the piece 21, are formed by press processing. Further, rectangular grooves 219A and 219B, which become the housing space 214 of the piece 21, and each have a cross section orthogonal to the longitudinal direction in a stepped rectangular shape, are formed. Here, the rectangular grooves 219A and 219B include wide rectangular grooves 2191A and 2191B, which become the housing space main body 214A, and also include narrow rectangular grooves 2192A and 2192B, which become the communicating portion 214B. The narrow rectangular grooves 2192A and 2192B are formed such that the tip end of the small-diameter engaging portion 2221 of the engaging pin 222 can protrude to the inside of the semicircular grooves 216A and 216B.

The respective grooves described above may be formed simultaneously with the plate-shaped member 215 when producing the plate-shaped member 215 by press molding or the like.

Then, the engaging pin 222 and the coil spring 223 are placed on the rectangular groove 219A of the plate-shaped member 215, and also the metal member 24 is placed on the surface (the upper surface in FIG. 6, and the inner surface when the plate-shaped member 215 is formed into the piece 21) provided with the grooves of the plate-shaped member 215.

Thereafter, the plate-shaped member 215 is folded on the center line A-A so that the surface having the grooves formed thereon is located inside. At this time, by forming the planar dimension of the rectangular groove 219B larger than the planar dimension of the rectangular groove 219A housing the engaging pin 222 and the coil spring 223, the rectangular groove 219B can be prevented from interfering with the engaging pin 222 and the coil spring 223 housed in the rectangular groove 219A when folding the plate-shaped member 215 on the center line A-A.

In this manner, the piece 21 in which the metal member 24 is housed inside, and also the tip end of the small-diameter engaging portion 2221 of the engaging pin 222 protrudes to the through-hole 213 is formed.

According to the embodiment described above, the effects as described below are obtained.
(1) Since the metal member 24 as the second member is provided so as to be electrically connected to the first member, the elution of Ni from the first member is effectively prevented.
(2) In particular, the metal member 24 as the second member is housed inside the piece 21 as the first member, and is hardly visually recognized in a state where the band 2 (watch 100) is used. Therefore, the effect as described above is obtained without sacrificing the appearance as an ornamental member (ornament).
(3) The plate-shaped member 215 is not provided with a concave portion for housing the metal member 24, and the metal member 24 can come in contact with the outside air. That is, the metal member 24 is housed inside the piece 21 as the first member so as not to be brought into an airtight state. As a result, the metal member 24 as the second member is affected by water penetrating inside the piece 21 from the outside, and thus, the ionization of Mg, Al, Zn, or Fe constituting the metal member 24 favorably proceeds.
(4) Since the engaging pin 222 is housed inside the housing space 214, whether the connecting pin 221 is inserted into the through-hole 213 or not, the engaging pin 222 is held inside the piece 21. Further, the coil spring 223 is also housed inside the housing space 214 along with the engaging pin 222 , and therefore is held inside the piece 21. Accordingly, there is no fear that the engaging pin 222 and the coil spring 223 will be detached and fall out from the piece 21, and the connecting pin 221 can be efficiently attached and detached, and thus, the length of the band 2 is easily adjusted.
(5) Since the large-diameter engaging portion 2223 of the engaging pin 222 is formed in a diameter dimension larger than that of the small-diameter engaging portion 2221, when the small-diameter engaging portion 2221 protrudes to the through-hole 213 only by a given length, the large-diameter engaging portion 2223 comes in contact with the inner surface of the housing space main body 214A on the side of the communicating portion 214B. In this manner, the protrusion of the small-diameter engaging portion 2221 can be limited to a given length.

Therefore, according to this embodiment, the protrusion amount can be easily set by changing the length of the small-diameter engaging portion 2221, and the connecting pin 221 can be attached and detached smoothly.

Further, since in the connected pieces 21, as shown in FIG. 5, the length L is set to be smaller than the length N in a state where the engaging concave portion 2215 of the connecting pin 221 is engaged with the tip end of the small-diameter engaging portion 2221 of the engaging pin 222, the connecting pin 221 is in a state where it is not pressed by the engaging pin 222. According to this, the connecting pin 221 can freely rotate around its axis even in a state where the connecting pin 221 is engaged with the engaging pin 222, and therefore, the connected pieces 21 can rotate smoothly around the connecting pin 221 as the axis at the time of use of the watch 100.
(6) In the connecting device 22 of this embodiment, it is not particularly necessary to insert some kind of component into the coil spring 223, and therefore, even if the piece 21 is restricted by the thickness, it is not necessary to sacrifice the durability of the coil spring 223. Therefore, the piece 21 can be easily thinned, and also the diameter and size of the coil spring 223 can be easily reduced. In addition, the coil spring 223 is disposed in a direction orthogonal to the width direction of the piece 21 (for example, a direction connecting the position at three o'clock to the position at nine o'clock of the watch), and therefore, the width dimension of the piece 21 can be reduced, and thus, the connecting device 22 can be easily applied also to a band for women.
(7) Since the small-diameter engaging portion 2221 has the engaging tapered portion 2222 at its tip end, and also the connecting pin 221 has the axial end tapered portion 2213 at its both ends, when the connecting pin 221 is inserted into the through-hole 213 and the axial end tapered portion 2213 comes in contact with the engaging tapered portion 2222, by pushing the connecting pin 221, sliding occurs between the axial end tapered portion 2213 and the engaging tapered portion 2222, so that the small-diameter engaging portion 2221 is pushed toward the communicating portion 214B. Then, the connecting pin 221 can be inserted such that the engaging concave portion 2215 is located at the position of the small-diameter engaging portion 2221.

Further, since the engaging concave portion 2215 has the tapered portion 2214 on its inner surface with which the tip end of the small-diameter engaging portion 2221 of the engaging pin 222 comes in contact when the connecting pin 221 is inserted, when the connecting pin 221 is pushed in a state where the engaging concave portion 2215 of the connecting pin 221 is engaged with the small-diameter engaging portion 2221, sliding occurs between the tapered portion 2214 and the engaging tapered portion 2222, so that the small-diameter engaging portion 2221 is pushed toward the communicating portion 214B. Then, the connecting pin 221 can be directly pushed out from the through-hole 213.

Here, if the setting of the inclinations of the engaging tapered portion 2222, the axial end tapered portion 2213, and the tapered portion 2214 is changed, a pushing force for the connecting pin 221 is changed, and therefore, the pushing force can be easily set to a magnitude optimum for the attachment and detachment of the connecting pin 221.

In this manner, the connecting pin 221 can be easily attached and detached.
(8) Since the engaging concave portion 2215 of the connecting pin 221 is provided throughout the entire circumference in a direction orthogonal to its axis, even if the connecting pin 221 is inserted into the through-hole 213 in any direction around its axis, the small-diameter engaging portion 2221 can be engaged with the engaging concave portion 2215, and therefore, the working efficiency of the attachment and detachment of the connecting pin 221 is favorable.
(9) Since the piece 21 is formed by folding one plate-shaped member 215, the through-holes 213 and the housing space 214 can be easily formed as compared with the case where the through-holes 213 and the housing space 214 are formed after forming one plate-shaped member 215 into the shape of the piece 21 beforehand. Further, it is also possible to reduce the number of components as compared with the case where the piece is formed by bonding two plate-shaped members, and thus, the control of the components at the time of production can be simplified. In addition, since the plate-shaped member 215 is plastically deformed by a folding process, bonding is not necessarily essential after folding.
   Further, by forming the planar dimension of the rectangular groove 219B larger than the planar dimension of the rectangular groove 219A housing the engaging pin 222 and the coil spring 223, the rectangular groove 219B can be prevented from interfering with the engaging pin 222 and the coil spring 223 housed in the rectangular groove 219A when folding the plate-shaped member 215 on the center line A-A.
(10) At the time of insertion of the connecting pin 221 into the through-hole 213, since the engaging concave portion 2215 is formed at the center of the connecting pin 221, and the engaging pin 222 is housed at the center of the longer side of the convex portion 211 of the piece 21, the engaging concave portion 2215 can be engaged with the engaging pin 222 even if the connecting pin 221 is inserted from either end thereof. Therefore, there is no restriction on the insertion direction of the connecting pin 221, and thus, the procedure of attachment and detachment of the connecting pin 221 is not complicated.

Hereinabove, preferred embodiments of the invention are described, however, the invention is not limited to those described above.

For example, in the ornamental member and the ornament, the configuration of each part can be replaced with an arbitrary configuration exhibiting a similar function, and also an arbitrary configuration can be added.

In the above-described embodiment, a case where the metal member as the second member is housed inside all of the pieces constituting the watch band is described as a representative example, however, the metal member may be provided only for some pieces among a plurality of the pieces constituting the watch band.

In the above-described embodiment, a case where the second part is housed inside the piece is described as a representative example, however, the second part may be placed in a region other than the inside of the piece (for example, the surface of the clasp, etc.).

Further, the second part may be placed, for example, in a region other than the watch band such as the watch main body (for example, the inside of the case, etc.). For example, the second part (second member) may be placed between the case and the bezel, or the like.

In the above-described embodiment, a case where the second part (second member) is in the form of a film is described as a representative example, however, the shape of the second part (second member) is not particularly limited, and may be any shape.

In the above-described embodiment, it is described that the second part (second member) is prepared as a member independent of the first part (first member), and these members are electrically connected to each other by bringing these members into contact with each other, however, the second member may be provided, for example, as a member bonded to the first member by any of various gas-phase deposition methods or a method such as thermal spraying.

In the above-described embodiment, a case where the ornamental member (ornament) is used in contact with a human body is mainly described, however, in the invention, the ornamental member or the ornament may not be used in contact with a human body, and may be a timepiece other than a wristwatch such as a pocket watch, a table clock, or a wall clock.

In the above-described embodiment, a case where the ornament is constituted by a plurality of the ornamental members is described as a representative example, however, in the invention, the ornament may be constituted by a single ornamental member.

### Examples

Hereinafter, the invention will be described in further detail by showing Examples, however, the invention is not limited to only these Examples.

### [1] Production of Watch Band

### Example 1

According to the method described in the above embodiment (see, FIG. 6), a watch band as shown in FIGS. 2A to 5 in which the metal member (second member) was housed inside a plurality of the pieces was produced.

As the piece, the connecting device, and the clasp serving as the first member, those composed of SUS 304 (Ni content: 9.1 mass%) which is austenitic stainless steel were used.

As the metal member serving as the second member, an aluminum foil (Al content: 99 mass% or more) having a thickness of 12 µm was used.

In the thus produced watch band, the metal member (second member) could not be visually recognized.

In this manner, 12 watch bands were produced.

### Example 2

A watch band was produced in the same manner as in the above Example 1 except that the metal member (second member) was disposed inside only a half of the plurality of the pieces constituting the watch band.

### Example 3

A watch band was produced in the same manner as in the above Example 1 except that the metal member (second member) was disposed inside only one piece among the plurality of the pieces constituting the watch band.

### Example 4

According to the method described in the above embodiment (see, FIG. 6), a watch band as shown in FIGS. 2A to 5 in which the metal member (second member) was housed inside a plurality of the pieces was produced.

As the piece, the connecting device, and the clasp serving as the first member, those composed of SUS 304 (Ni content: 9.1 mass%) which is austenitic stainless steel were used.

As the metal member serving as the second member, an Al deposition pattern (having the same shape as a foil) was formed directly on the first member through a mask having a hole in a region where an aluminum deposition film (Al content: 99 mass% or more) having a thickness of 12 µm was formed.

In the thus produced watch band, the metal member (second member) could not be visually recognized.

In this manner, 12 watch bands were produced.

### Example 5

A watch band was produced in the same manner as in the above Example 4 except that the metal member (second member) was disposed inside only a half of the plurality of the pieces constituting the watch band.

### Example 6

A watch band was produced in the same manner as in the above Example 4 except that the metal member (second member) was disposed inside only one piece among the plurality of the pieces constituting the watch band.

### Comparative Example 1

A watch band was produced in the same manner as in the above Example 1 except that the metal member was not disposed in any of the plurality of the pieces constituting the watch band.

### [2] Evaluation

### Evaluation of Appearance

With respect to the watch bands produced in the above respective Examples and Comparative Example, visual observation was performed immediately after the production, and evaluation was performed according to the following criteria.
A: The watch band exhibits the texture intrinsically possessed by stainless steel and has extremely excellent appearance.
B: The watch band does not exhibit the texture intrinsically possessed by stainless steel and has poor appearance.

### Evaluation of Elution Amount of Ni

First, in a 1000-mL beaker, 900 mL of deionized water (ion exchanged water) was placed, and 1.00 g of urea, 5.00 g of sodium chloride, and 1.00 g of lactic acid were added thereto, followed by stirring until these components were dissolved, whereby a test solution was obtained.

Subsequently, in the test solution in the beaker, a pH electrode was immersed, and a 1 Maqueous solution of sodium hydroxide was slowly added dropwise (drop by drop) thereto while continuously stirring the test solution until the pH reached 5.5.

Thereafter, further, a 0.1 M aqueous solution of sodium hydroxide was slowly added dropwise (drop by drop) thereto until the pH reached 6.5 and became stable.

After 10 minutes passed from the addition of the final drop of the 0.1 M aqueous solution of sodium hydroxide, the pH of the test solution was measured, and it was confirmed that the pH was within the range of 6.5 ± 0.05.

The above procedure (preparation of the test solution) was performed in an environment at room temperature (25°C) in each case.

Thereafter, the test solution whose pH was adjusted as described above was heated in an airtight container, whereby the liquid temperature was increased to 30°C.

Subsequently, the test solution whose liquid temperature was adjusted was transferred to a given container, and with respect to each of the above Examples and Comparative Example, three watch bands were suspended from a holder made of a resin (not containing Ni) and completely immersed in the test solution.

Thereafter, the container was hermetically sealed with a lid made of a rubber, and left to stand for 168 hours under a condition of 30°C in a water tank controlled by a thermostat.

The amount of the test solution in the container was set to 59 mL (1 mL per cm² of the surface area of the watch band).

After 168 hours passed from the immersion of the watch band in the test solution, the watch band was slowly taken out from the test solution.

The test solution after the watch band was taken out therefrom was transferred to a volumetric flask with a capacity of 500 mL washed with dilute nitric acid beforehand.

Thereafter, the nickel content in the test solution after the watch band was taken out therefrom was measured using ICP-MS (7700x, manufactured by Agilent, Inc.).

With respect to the above respective Examples and Comparative Example, repeated measurements were performed under the same conditions as described above using three watch bands different from those used in the above measurement for each Example.

Based on the average of the nickel contents determined by the measurements, the elution amount of nickel was evaluated according to the following criteria.
A: The elution amount of nickel is less than 0.05 µg/mL.
B: The elution amount of nickel is 0.05 µg/mL or more and less than 0.25 µg/mL.
C: The elution amount of nickel is 0.25 µg/mL or more and less than 0.50 µg/mL.
D: The elution amount of nickel is 0.50 µg/mL or more and less than 0.85 µg/mL.
E: The elution amount of nickel is 0.85 µg/mL or more.

### Evaluation of Appearance after Ni Elution Test

With respect to the watch bands of the above respective Examples and Comparative Example after performing the Ni elution test in the above [2.2], visual observation was performed, and evaluation was performed according to the following criteria.
A: The watch band exhibits the texture intrinsically possessed by stainless steel and has extremely excellent appearance.
B: The watch band does not exhibit the texture intrinsically possessed by stainless steel due to corrosion or the like and has poor appearance.

These results are summarized and shown in Table 1.

**Table 1**

| | Evaluation of appearance immediately after production | Elution amount of Ni | Evaluation of appearance after Ni elution test |
|---|---|---|---|
| Example 1 | A | A | A |
| Example 2 | A | A | A |
| Example 3 | A | B | A |
| Example 4 | A | A | A |
| Example 5 | A | A | A |
| Example 6 | A | B | A |
| Comparative Example 1 | A | E | B |

As apparent from Table 1, according to the invention, the elution of Ni was prevented, and a Ni allergy problem was less likely to occur. Further, according to the invention, the appearance was excellent also after the Ni elution test. On the other hand, in the case of Comparative Example, satisfactory results could not be obtained.

When watch bands were produced in the same manner as described above except that the metal member as the second member was changed to a film made of a magnesium alloy (Al content: 9.0 mass%, Mg content: 90 mass% or more) having a thickness of 100 µm, a film made of Zn (Zn content: 99 mass% or more) having a thickness of 50 µm, or a film made of Fe (Fe content: 99 mass% or more) having a thickness of 40 µm, and evaluation was performed in the same manner as described above, the same results as described above were obtained.

Further, the watch band produced in each of the above Examples and Comparative Example (which did not undergo evaluation for the watch band alone) was attached to a watch main body provided with a case and a rear lid, each composed of SUS 304 (Ni content: 9.1 mass%), whereby watches as shown in FIG. 1 were obtained.

When evaluation was performed in the same manner as described above with respect to the thus obtained watches, the same results as described above were obtained. In particular, it was confirmed that also for the case, the rear lid, etc. constituting the watch main body, the elution of Ni and corrosion were prevented. It is considered that this is because the case and the rear lid, each composed of stainless steel, functions as the first member.

## Claims

1. Use of a material containing one or more elements selected from the group consisting of Mg, Al, Zn, and Fe in an ornamental member to make it less likely to cause an Ni allergy problem, the ornamental member comprising:
a first part (21, 22, 23) composed of stainless steel containing Ni; and
a second part (24) electrically connected to the first part, with the second part (24) being composed of the material containing one or more elements selected from the group consisting of Mg, Al, Zn, and Fe.

2. The use according to claim 1, wherein the second part (24) is provided in a region where the second part (24) is not visually observable.

3. The use according to claim 1 or 2, wherein the second part (24) is formed using a material in the form of a film.

4. The use according to claim 1 or 2, wherein the second part (24) is formed using a metal foil.

5. The use according to one of the preceding claims, wherein the content of Ni in the first part (21-23) is 2.0 mass% or more and 29.0 mass% or less.

6. The use according to one of the preceding claims, wherein the first part (21-23) is composed of SUS 304.

7. The use according to one of the preceding claims, wherein the ornamental member is to be used in contact with a human body.

8. The use according to one of the preceding claims, wherein the ornamental member is a watch band.

## Patentansprüche

1. Verwendung eines Material, das ein oder mehrere Elemente der Gruppe, die aus Mg, Al, Zn, und Fe besteht, aufweist in einem Ornamentalelement, um es unwahrscheinlicher zu machen, ein Ni-Allergieproblem zu verursachen, wobei das Ornamentalelement aufweist:
ein erstes Teil (21, 22, 23), das zusammengesetzt ist aus Edelstahl und Ni aufweist; und
ein zweites Teil (24), das elektrisch mit dem ersten Teil verbunden ist, mit dem zweiten Teil (24) bestehend aus einem Material, das eines oder mehrere der Elemente aus der Gruppe, die Mg, Al, Zn, und Fe beinhaltet, aufweist.

2. Verwendung nach Anspruch 1, wobei der zweite Teil (24) in einer Region vorgesehen ist, in dem der zweite Teil (24) nicht visuell sichtbar ist.

3. Verwendung nach Anspruch 1 oder 2, wobei der zweite Teil (24) ausgebildet ist durch die Benutzung eines Materials in der Form eines Films.

4. Verwendung nach Anspruch 1 oder 2, wobei der zweite Teil (24) ausgebildet ist durch die Benutzung einer Metallfolie.

5. Verwendung nach einem der vorigen Ansprüche, wobei der Inhalt von Ni in dem ersten Teil (21-23) 2.0 Massenprozent oder mehr und 29.0 Massenprozent oder weniger ist.

6. Verwendung nach einem der vorigen Ansprüche, wobei der erste Teil (21-23) aus SUS 304 besteht.

7. Verwendung nach einem der vorigen Ansprüche, wobei das Ornamentalelement in Kontakt mit einem menschlichen Körper benutzt wird.

8. Verwendung nach einem der vorigen Ansprüche, wobei das Ornamentalelement ein Uhrenband ist.

## Revendications

1. Utilisation d'un matériau contenant un ou plusieurs éléments choisis dans le groupe constitué de Mg, Al, Zn, et Fe dans un objet décoratif pour diminuer la probabilité de causer un problème d'allergie au Ni, l'objet décoratif comprenant :
une première partie (21, 22, 23) composée d'acier inoxydable contenant du Ni ; et
une seconde partie (24) connectée électriquement à la première partie, avec la seconde partie (24) étant composée du matériau contenant un ou plusieurs éléments choisis dans le groupe constitué de Mg, Al, Zn, et Fe.

2. Utilisation selon la revendication 1, dans laquelle la seconde partie (24) est fournie dans une région où la seconde partie (24) n'est pas visuellement observable.

3. Utilisation selon la revendication 1 ou 2, dans laquelle la seconde partie (24) est formée en utilisant un matériau sous la forme d'un film.

4. Utilisation selon la revendication 1 ou 2, dans laquelle la seconde partie (24) est formée en utilisant une feuille métallique.

5. Utilisation selon l'une des revendications précédentes, dans laquelle la teneur en Ni dans la première partie (21-23) est de 2,0 % en masse ou plus et 29,0 % en masse ou moins.

6. Utilisation selon l'une des revendications précédentes, dans laquelle la première partie (21-23) est composée de SUS 304.

7. Utilisation selon l'une des revendications précédentes, dans laquelle l'objet décoratif est destiné à être utilisé en contact avec un corps humain.

8. Utilisation selon l'une des revendications précédentes, dans laquelle l'objet décoratif est un bracelet de montre.
